# EUROPEAN PATENT SPECIFICATION

(11) **EP 3 030 928 B1**
(45) Date of publication and mention of the grant of the patent: **01.05.2024**
(21) Application number: 14758699.4
(22) Date of filing: 08.08.2014
(51) Int. Cl.: G02B 6/38

(54) **METHOD FOR ARRANGING A CONNECTOR TO AN OPTICAL FIBRE**
VERFAHREN ZUM ANORDNEN EINES VERBINDERS AN EINER OPTISCHEN FASER
PROCÉDÉ PERMETTANT DE DISPOSER UN CONNECTEUR SUR UNE FIBRE OPTIQUE

(30) Priority: 09.08.2013 NL 2011287
(43) Date of publication of application: 15.06.2016
(73) Proprietor: B.V. Twentsche Kabelfabriek, 7481 KJ Haaksbergen (NL)
(72) Inventor: BRESSER, Onno Roland, NL-7451 HC Holten (NL)
(74) Representative: Luten, Martin Haaije
(86) International application number: PCT/NL2014/050553
(87) International publication number: WO 2015/020526

(56) References cited:
- US-A1- 2002 159 729
- US-A1- 2009 214 164
- US-A1- 2010 080 511
- US-B1- 6 742 936

## Description

The present invention relates to a method for arranging a connector on an optical fibre provided with a cladding.

In the mutual connection of optical components, for instance optical conductors in the form of fibres to each other or an optical conductor to optical equipment, it is important that the conductive core in the fibre is properly aligned with either the conductive core of the other fibre or the conductor in the equipment. This alignment is particularly difficult since the core is not generally located exactly in the centre of the fibre.

Use is made of a connector in order to connect an optical fibre. Such a connector is generally provided with a ferrule provided with a passage or cylindrical receiving space in which the fibre, i.e. core and cladding, has to be arranged in closely fitting manner, for instance by gluing. Possible clearance between the wall of the receiving space and the cladding around the core of the fibre introduces additional uncertainty here in respect of alignment, in addition to the already existing uncertainty in respect of the eccentricity of the core in the fibre. US 6 742 936 B1 discloses a method to select ferrules having a certain bore diameter to offset the eccentricity of the bore with respect to the outer surface of the ferrule.

Another problem occurring in the mechanical manufacture of the optical fibres provided with connectors is the low yield of the process. More specifically, a large number of the optical fibres falling within the specifications of the ITU-T recommendation G.657.A1/A2 (with an outer diameter of the cladding of 125.0 ± 0.7 µm) are found to be unsuitable for arranging in the ferrule in terms of fit. As an indication, it has been found that only about 31% of the fibres manufactured in accordance with this recommendation are suitable for arranging in the existing ferrules for the fibres with these dimensions.

It is therefore an object of the present invention, in addition to other objectives, to provide a more effective, more efficient and/or simpler method for arranging a connector on an optical fibre provided with a cladding.

This and other objectives are achieved with a method according to claim 1.

The diameter of the connector to be provided is more specifically adapted to the specifications of the fibre on which these connectors have to be arranged. It is therefore not necessary here for the actual (for instance measured) outer diameter of the fibre to be used as starting point for the diameter of the receiving space. This is because it is possible for this actual diameter to differ from the nominal outer diameter as specified because of the distribution in the diameters of the fibres. Depending among other factors on the production process of the fibres, this distribution is for instance narrower in the case of good-quality manufacturers.

The term specifications may relate to the specifications as defined by a supplier or producer of the fibres and describes at least the nominal outer diameter of the fibre and a tolerance for the outer diameter which determines a maximum outer diameter of the fibre. The ITU-T recommendations G.651 to G.657 for instance specify a nominal outer diameter of 125.0 µm.

It is current practice to produce ferrules with a diameter corresponding to the nominal outer diameter of the fibre with a tolerance of minus 0 and a plus tolerance of several micrometres. This means that in practice the minimum diameter of the receiving space is equal to the nominal outer diameter of the fibre, wherein some upward clearance is allowed.

In order to provide a good fit and to prevent a fibre being too large for the ferrule in the continuous arranging process, a margin of about 0.1 µm is moreover adhered to in practice between the diameters of the fibre and the receiving space. Only those fibres having an outer diameter smaller than or equal to the nominal outer diameter minus this margin are selected here prior to arranging of the connectors.

More specifically in the case of a fibre with a nominal outer diameter of 125.0 µm in accordance with the above stated recommendation, only fibres are selected on which connectors with an outer diameter smaller than or equal to 124.9 µm are eventually arranged. This selection step reduces the yield of the process, wherein the yield is especially affected in the case of a manufacturer able to produce fibres with a very narrow distribution in outer diameter.

Despite the nominal diameters specified in the ITU-T recommendations, it is moreover known to modify the production process of the fibres such as to reduce this nominal diameter in order to obtain a good fit. However, reducing the diameter also changes other properties of the fibre in a negative sense.

By now adapting the diameter of the receiving space or bore of the ferrule to this nominal outer diameter as specified in for instance the above stated ITU-T recommendation or the specifications of a manufacturer or supplier of optical fibres, production loss of fibres which exactly comply with these specifications is prevented. In other words, a connector can be arranged on a fibre with an outer diameter corresponding exactly to the outer diameter specified by the specification, this in contrast to what is now usual.

According to a preferred embodiment of the method according to the invention, the fibre is indeed a fibre recommended by the ITU-T with a nominal outer diameter of 125.0 µm, more specifically a fibre in accordance with one of the ITU-T recommendations G.651 to G.657.

2. According to the claimed invention the fibre specifications also specify a tolerance for the outer diameter which determines a maximum outer diameter of the fibre, wherein the minimum diameter of the receiving space of the connector is larger than this maximum outer diameter. The minimum diameter of the receiving space in the ferrule depends here on the tolerance of the nominal outer diameter in accordance with the specifications. Selecting a diameter which is slightly larger, preferably about 0.1 µm larger, ensures a good fit, while the clearance between the receiving space and the fibre remains limited in view of the alignment of the core.

Tolerances are also specified in the above stated ITU-T recommendations by way of indication. ITU-T G.652.D and G.657.A1/A2 for instance specify respectively ± 1 µm and ± 0.7 µm. On the basis of these specifications the receiving spaces would preferably have a diameter of respectively at least 126.1 µm and 125.8 µm.

It is however also possible for the diameter of the receiving space of the ferrule, i.e. the connector, to be subject to the specifications of the manufacturer. It is thus possible that the specifications of a fibre determine that the tolerance is smaller, for instance ± 0.3 µm. The receiving space then preferably has a diameter of at least 125.4 µm.

The step of providing the connector comprises of providing a connector having predetermined connector specifications, wherein the connector specifications specify at least a minimum diameter of the opening which is larger than the maximum outer diameter of the fibre.

As already stated, a distribution in the diameters of a larger group of connectors can also be seen due to variations in the production process. It is therefore usual that the properties of the connectors are also defined in the specifications by suppliers and manufacturers. These specifications generally specify a nominal diameter of the receiving space with tolerance. The tolerances are often defined such that downward variations are not permitted (minus 0 tolerance), wherein some upward variation is tolerated (plus several micrometres). This lower limit in the tolerance range is referred to here as the minimum diameter, which therefore corresponds in practice to the nominal diameter.

As already noted above, a very high yield of the method according to the invention is obtained when the connector specifications specify a minimum diameter of the opening which is larger than that maximum outer diameter of the fibre. The connector specifications here preferably specify a minimum diameter for the receiving space which is about 0.1 µm larger than the maximum outer diameter of the fibre.

According to the claimed invention each of the connectors is provided with a receiving space with a minimum diameter larger than a maximum outer diameter of the plurality of fibres. This maximum outer diameter is determined on the basis of the specifications of the provided fibres. For the purpose of effectiveness the minimum diameter of the receiving space is again at least 0.1 µm larger than the maximum outer diameter.

It is for instance possible to select only fibres with a tolerance of for instance ± 0.3 µm, ± 0.2 µm or even ± 0.1 µm relative to the nominal diameter (for instance 125.0 µm), wherein the minimum diameters of the receiving spaces are selected corresponding to the nominal diameter + 0.4 µm, + 0.3 µm and + 0.2 µm. The maximum diameter of the receiving space depends on the production process but is preferably as small as possible.

A further preferred embodiment of the method according to the invention further comprises the step of manufacturing a connector, wherein the manufacture comprises of providing a connector body and arranging an opening in the body with a diameter larger than the nominal diameter of the fibre. Arranging the opening for the purpose of forming the receiving space can for instance take place by means of drilling, reaming and/or honing such that the diameter of the receiving space corresponds to the (maximum) outer diameter of the fibre.

As stated, determining the nominal and maximum outer diameter is done on the basis of the specifications of the fibre.

The present invention is further illustrated with reference to the following figures, which are not intended to limit the scope of the invention in any way, wherein:
- Figures 1a and 1b show schematically a ferrule in respectively perspective and crosssectional view;
- Figures 2 and 3 show the yield of a conventional method for arranging ferrules on fibres;
- Figures 4 and 5 show the yield of methods according to the invention.

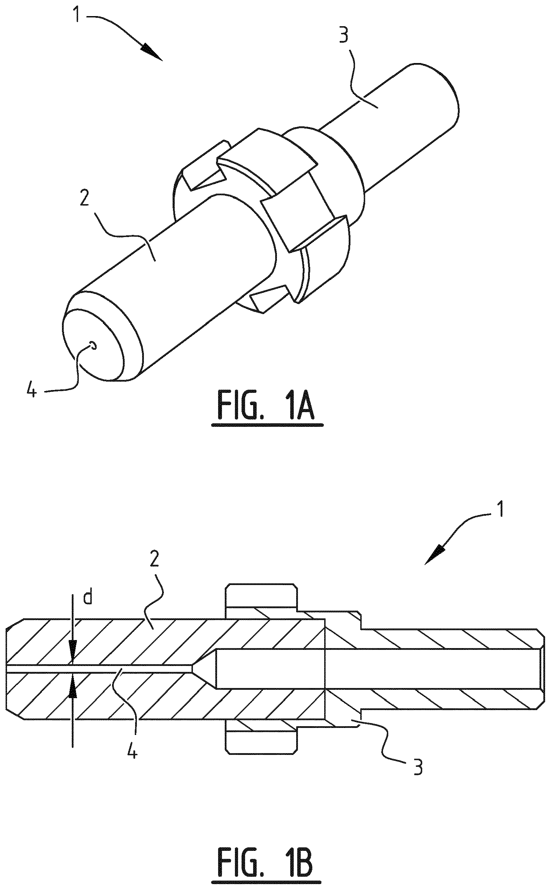

Figures 1a and 1b show schematic views of a ferrule 1. Ferrule 1 forms part of a connector for an optical fibre and is configured to receive an optical fibre. The ferrule is provided with a ceramic body 2 in which a bore 4 is arranged. Bore 4 has a diameter d over the greater part of its length. Bore 4 becomes wider toward the right-hand outer end. Ceramic body 2 is partially enclosed by a holder 3.

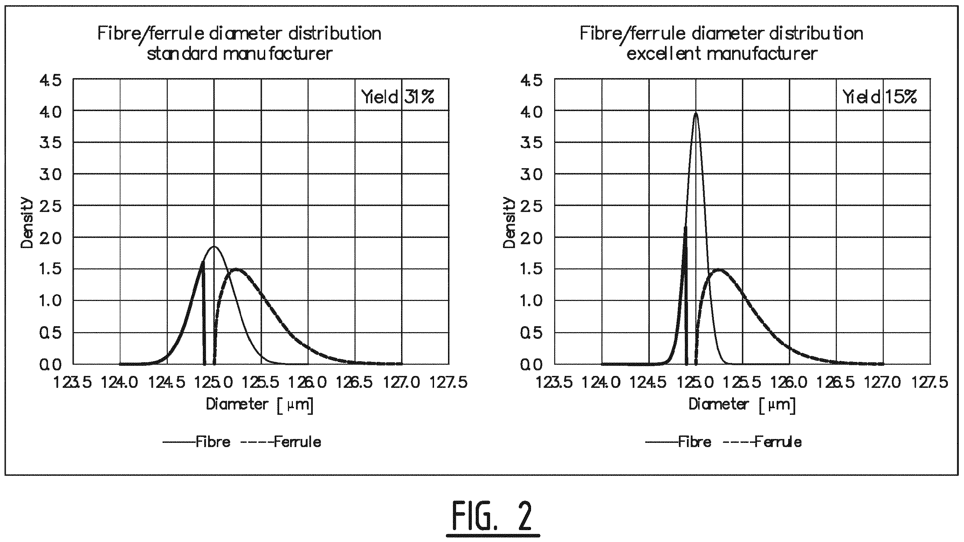

With reference to the annexed table 1, the ITU-T G.657.A1/A2 recommendation specifies an outer diameter of a fibre with cladding of 125.0 ± 0.7 µm, wherein the range of the diameters is shown in the adjacent column. Both a manufacturer with a very precise production process and a normal manufacturer can manufacture these fibres without problem, so that in both cases the yield is 100%. This normal manufacturer however has a yield of only 76% in respect of supplying fibres with a narrower distribution of ± 0.3 µm in diameters (see the second row), while the excellent manufacturer still has a yield of 100%. The distribution in diameters is visible in the left-hand parts of the diagrams of figure 2.

| **Table 1** | | | | | | | |
|---|---|---|---|---|---|---|---|
| Fibre spec. | Cladding diameter [µm] | Diameter range [µm] | Ferrule spec. | Ferrule bore [µm] | Diameter range [µm] | Yield excellent supplier [%] | Yield standard supplier [%] |
| ITU | 125.0 ± 0.7 | 124.3 - 125.7 | Standard | 125.0 - 0/+1.2 | 125.0 - 126.2 | 100 | 100 |
| EM | 125.0 ± 0.3 | 124.7 - 125.3 | Standard | 125.0 - 0/+1.2 | 125.0 - 126.2 | 100 | 76 |
| | | | | | | | |
| ITU selected* | | 124.3 - 124.9 | Standard | 125.0 - 0/+1.2 | 125.0 - 126.2 | | 31 |
| EM selected* | | 124.7 - 124.9 | Standard | 125.0 - 0/+1.2 | 125.0 - 126.2 | 15 | |
| | | | | | | | |
| ITU shifted** | 124.8 ± 0.7 | 124.3 - 124.9 | Standard | 125.0 - 0/+1.2 | 125.0 - 126.2 | | 67 |
| EM shifted** | 124.8 + 0.3 | 124.5 - 124.9 | Standard | 125.0 - 0/+1.2 | 125.0 - 126.2 | 83 | |
| | | | | | | | |
| EM | 125.0 + 0.3 | 124.7 - 125.3 | Selection 1 | 125.4 - 0/+1.2 | 125.4 - 126.6 | 100 | 90 |
| Fibre selection 1 | 125.0 + 0.2 | 124.8 - 125.2 | Selection 2 | 125.3 - 0/+1.2 | 125.3 - 126.5 | 96 | 66 |
| Fibre selection 1 | 125.0 ± 0.2 | 124.8 - 125.2 | Selection 3 | 125.3 - 0/+0.7 | 125.3 - 126.0 | 96 | 66 |
| Fibre selection 2 | 125.0 ± 0.1 | 124.9 - 125.1 | Selection 4 | 125.2 - 0/+1.2 | 125.2 - 126.4 | 71 | 38 |
| Fibre selection 2 | 125.0 ± 0.1 | 124.9 - 125.1 | Selection 5 | 125.0 - 0/+0.7 | 125.2 - 125.7 | 71 | 38 |
| ITU: G.657.A1/A2 | | | × selection necessary to ensure fibre fits in ferrule | | | | |
| EM: Excellent Manufacturer | | | ×× shift necessary to improve yield, fibre within specification | | | | |

The columns relating to the specifications of the ferrule show that a standard ferrule has a specified diameter of the receiving space or bore of 125.0 -0/+1.2 µm. This means that the bore has a minimum diameter of 125.0 µm and a maximum diameter of 126.2 µm. In order to ensure a good fit the fibres are thus selected from the range of the produced fibres which have a diameter smaller than or equal to 124.9 µm, see the rows designated with 'ITU/EM selected', which describe the fibres according to said ITU-T recommendation and the fibre manufactured by an `Excellent Manufacturer'. These diameters are designated with thick lines in the diagrams of figure 2. It will be apparent that the yield is low, i.e. 31% for a normal manufacturer, as already stated in the introduction, wherein the yield of the excellent manufacturer at 15% is even lower than the yield of the normal manufacturer.

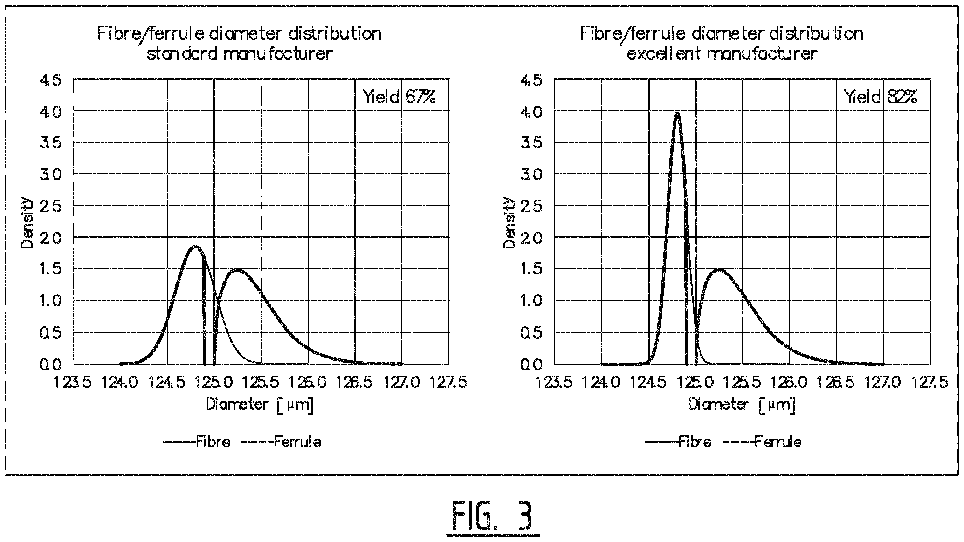

In order to improve this yield it is known to artificially modify the production process such that the nominal diameter is reduced, see the rows 'ITU/EM shifted' and figure 3 which shows the distribution for this case. Although the yield is increased, shifting of this diameter has an adverse effect on other essential properties of the fibre.

Used according to the invention is a ferrule, the diameter of the bore of which is adapted to the size of the maximum diameter of the fibre to be used. The ferrule designated with 'Selection 1' for instance has a minimum diameter of 125.4 µm, 0.1 µm larger than the outer limit of 125.3 µm in accordance with the specification of this fibre (EM). The combination of this fibre with a ferrule with a plus tolerance of 1.2 µm then produces a yield of 100% for the excellent manufacturer and a yield of 90% for a normal manufacturer.

A further improvement can be achieved, particularly in respect of alignment of the core, by still further preselection of the fibres. Reference is also made here to table 2, in which the maximum eccentricity of the fibre in the ferrule (depending on tolerance of the diameter of the bore), the eccentricity of the bore in the ferrule (specified), the maximum eccentricity of the core in the fibre (specified) and, derived therefrom, the maximum eccentricity of the core relative to the ferrule are included for the different combinations of the ferrules and fibre(s) or fibre selection(s). The maximum attainable grades are also included.

| **Table 2** | | | | | | |
|---|---|---|---|---|---|---|
| Fibre specification | Ferrule spec. | Maximum eccentricity fibre in ferrule [µm] | Maximum ferrule hole eccentricity [µm] | Maximum core concentricity error ITU [µm] | Maximum core eccentricity in ferrule [µm] | Maximum attainable connector grade (IEC) |
| ITU | Standard | 0.95 | 0.5 | 0.5 | 1.95 | D |
| EM | Standard | 0.75 | 0.5 | 0.5 | 1.75 | D |
| | | | | | | |
| ITU selected* | Standard | 0.95 | 0.5 | 0.5 | 1.95 | D |
| EM selected* | Standard | 0.75 | 0.5 | 0.5 | 1.75 | D |
| | | | | | | |
| ITU shifted* * | Standard | 0.95 | 0.5 | 0.5 | 1.95 | D |
| EM shifted** | Standard | 0_85 | 0.5 | 0.5 | 185 | D |
| | | | | | | |
| EM | Selection 1 | 0_95 | 0.5 | 0.5 | 195 | D |
| Fibre selection 1 | Selection 2 | 0.85 | 0.5 | 0.5 | 1.85 | D |
| Fibre selection 1 | Selection 3 | 0.60 | 0.5 | 0.5 | 1.60 | C*** |
| Fibre selection 2 | Selection 4 | 0.75 | 0.5 | 0.5 | 1.75 | D |
| Fibre selection 2 | Selection 5 | 0.40 | 0.5 | 0.5 | 1.40 | C*** |
| ××× grade B attainable by selection on fibre core concentricity error and ferrule hole eccentricity | | | | | | |

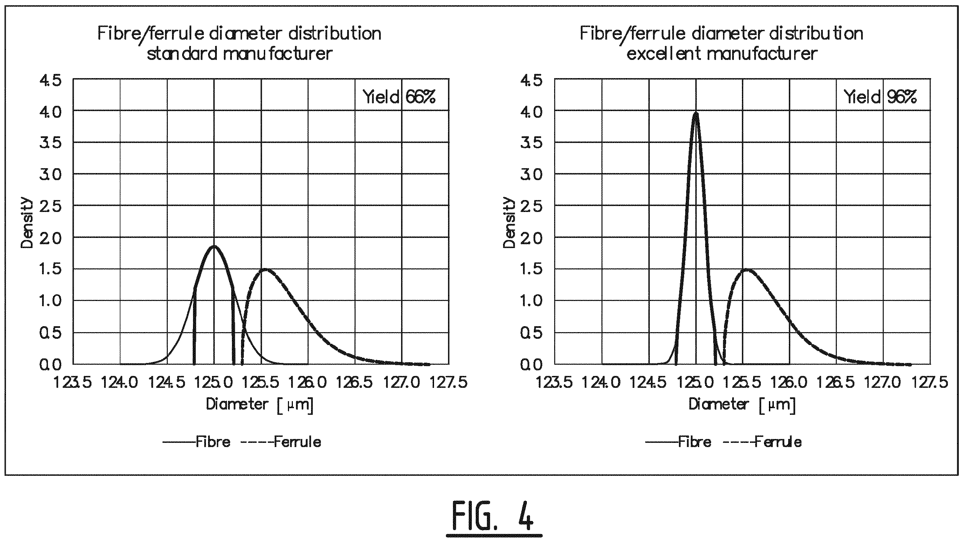

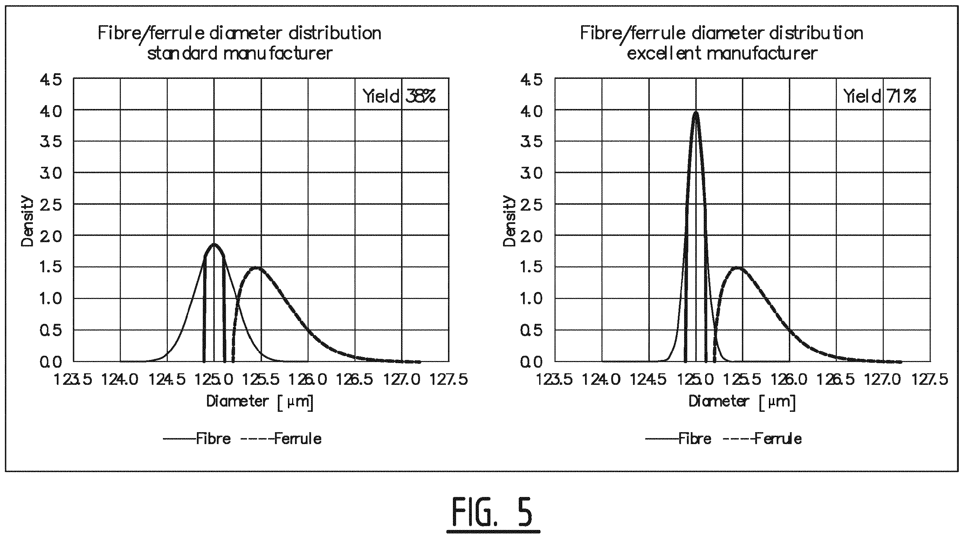

By further limiting the allowable variation in the nominal diameter, for instance to 0.2 µm and 0.1 µm, and adapting accordingly the minimum diameters of the ferrule, i.e. making this 0.1 µm larger than this maximum diameter of the fibres, fibres provided with connectors can be produced with a relatively small eccentricity between core and ferrule, with relatively high yield, see also figures 4 and 5. Figure 4 shows the distribution for `Fibre selection 1', while figure 5 shows the distribution for `Fibre selection 2'. Reducing the tolerances of the diameter of the ferrule from 1.2 to 0.7 also has a positive effect on the maximum eccentricity, see the rows with `Selection 3' and 'Selection 5'.

The present invention is not limited to the shown embodiments but also extends to other embodiments falling within the scope of the appended claims.

## Claims

1. Method for arranging a connector on an optical fibre comprising a cladding and core, wherein the method comprises the steps of:
- providing a plurality of fibres with predetermined fibre specifications, wherein said fibre specifications specify at least a nominal outer diameter and a tolerance for the outer diameter which determines a maximum outer diameter of the fibre; and
- providing a plurality of connectors with a cylindrical receiving space (4) for receiving a fibre, the plurality of connectors having predetermined connector specifications;
- providing a fibre from the plurality of fibres and providing a connector from the plurality of connectors; and
inserting and fixing the fibre from the plurality of fibres in the cylindrical receiving
space (4) of the connector from the plurality of connectors, **characterized in that** the connector specifications specify at least a minimum diameter of the cylindrical receiving space (4) which is larger than the maximum outer diameter of the fibre.

2. Method as claimed in claim 1, wherein the connector specifications specify a minimum diameter for the receiving space (4) which is about 0.1 µm larger than the maximum outer diameter of the fibre.

3. Method as claimed in any of the foregoing claims, wherein the step of providing a plurality of connectors further comprises the step of manufacturing a connector, wherein the manufacture comprises of providing a connector body (2) and arranging an opening, forming the cylindrical receiving space (4), in the body with a diameter (d) larger than the nominal diameter of the fibre.

## Patentansprüche

1. Verfahren zum Anordnen eines Verbinders an einer optischen Faser, umfassend eine Umhüllung und einen Kern, wobei das Verfahren die folgenden Schritte umfasst:
- Bereitstellen einer Vielzahl von Fasern mit vorbestimmten Faserspezifikationen, wobei die Faserspezifikationen mindestens einen nominalen Außendurchmesser und eine Toleranz für den Außendurchmesser angeben, die einen maximalen Außendurchmesser der Faser bestimmt; und
- Bereitstellen einer Vielzahl von Verbindern mit einem zylindrischen Raum (4) zum Empfangen einer Faser, wobei die Vielzahl der Verbinder vorbestimmte Verbinderspezifikationen aufweist;
- Bereitstellen einer Faser aus der Vielzahl der Fasern und Bereitstellen eines Verbinders aus der Vielzahl der Verbinder; und
Einführen und Fixieren der Faser aus der Vielzahl von Fasern in den zylindrischen Empfangsraum (4) des Verbinders aus der Vielzahl von Verbindern,
**dadurch gekennzeichnet, dass** die Verbinderspezifikationen mindestens einen minimalen Durchmesser des zylindrischen Empfangsraums (4) angeben, der größer ist als der maximale Außendurchmesser der Faser.

2. Verfahren nach Anspruch 1, wobei die Verbinderspezifikationen einen Mindestdurchmesser für den Empfangsraum (4) vorgeben, der etwa 0,1 pm größer ist als der maximale Außendurchmesser der Faser.

3. Verfahren nach einem der vorstehenden Ansprüche, wobei der Schritt des Bereitstellens einer Vielzahl von Verbindern ferner den Schritt des Herstellens eines Verbinders umfasst, wobei das Herstellen das Bereitstellen eines Verbinderkörpers (2) und das Anordnen einer Öffnung umfasst, die den zylindrischen Empfangsraum (4) bildet, in dem Körper mit einem Durchmesser (d), der größer ist als der Nenndurchmesser der Faser.

## Revendications

1. Procédé d'agencement d'un connecteur sur une fibre optique comprenant une gaine et un noyau, dans lequel le procédé comprend les étapes consistant à :
- fournir une pluralité de fibres avec des spécifications de fibre prédéterminées, dans lequel lesdites
spécifications de fibre spécifient au moins un diamètre externe nominal et une tolérance pour le diamètre externe qui détermine un diamètre externe maximal de la fibre ; et
- fournir une pluralité de connecteurs avec un espace de réception cylindrique (4) pour recevoir une fibre, la pluralité de connecteurs ayant des spécifications de connecteur prédéterminées ;
- fournir une fibre à partir de la pluralité de fibres et fournir un connecteur à partir de la pluralité de connecteurs ; et
- insérer et fixer la fibre parmi la pluralité de fibres dans l'espace
de réception cylindrique
(4) du connecteur parmi la pluralité de connecteurs, **caractérisé en ce que** les spécifications de connecteur spécifient au moins un diamètre minimal de l'espace de réception cylindrique (4) qui est plus grand que le diamètre externe maximal de la fibre.

2. Procédé selon la revendication 1, dans lequel les spécifications de connecteur spécifient un diamètre minimal pour l'espace de réception (4) qui est d'environ 0,1 µm plus grand que le diamètre externe
maximal de la fibre.

3. Procédé selon l'une quelconque des revendications précédentes, dans lequel l'étape consistant à fournir une pluralité de connecteurs comprend en outre l'étape consistant à fabriquer un connecteur, dans lequel la fabrication comprend la fourniture d'un corps de connecteur (2) et l'agencement d'une ouverture formant
l'espace de réception cylindrique (4), dans le corps avec un diamètre (d) plus grand que le
diamètre nominal de la fibre.
